# EUROPEAN PATENT SPECIFICATION

(11) **EP 3 244 746 B1**
(45) Date of publication and mention of the grant of the patent: **24.10.2018**
(21) Application number: 16710018.9
(22) Date of filing: 13.01.2016
(51) Int. Cl.: A23C 19/00, A23C 19/06, A23C 19/09

(54) **SPREADABLE CHEESE FROM CURD.**
STREICHFÄHIGER KÄSE AUS GERONNENER MILCH
FROMAGE POUVANT ÊTRE ÉTALÉ À PARTIR DE LAIT CAILLÉ

(30) Priority: 13.01.2015 EP 15150983
(43) Date of publication of application: 22.11.2017
(73) Proprietor: Coöperatie AVEBE U.A., 9641 GK Veendam (NL)
(72) Inventor: BUWALDA, Pieter Lykle, 9641 GK Veendam (NL); VAN DEN AKKER-BLEUMINK, Bernarda, 9641 GK Veendam (NL); MULDER, Frederik, 9641 GK Veendam (NL)
(74) Representative: V.O.
(86) International application number: PCT/NL2016/050025
(87) International publication number: WO 2016/114657

(56) References cited:
- WO-A1-2012/080150
- WO-A2-2008/071744
- GB-A- 2 032 241
- US-A- 5 679 396

## Description

The invention relates to the field of cheese making, in particular to the production of a soft cheese or a spreadable cheese.

Conventional semi hard/hard cheese processing involves the formation of a cheese curd from milk. Customarily, pasteurized milk is inoculated with a cheese starter culture of a selected micro-organism, optionally pre-acidifying the milk, adding rennet or another suitable coagulant to the milk to form a curd. Thereafter, the coagulated milk is subjected to cutting and draining to remove excess whey from the curd.

Curd processing in semi hard/hard cheese manufacture, to obtain e.g. Cheddar, Gouda or Edam, comprises removal of residual whey by heating, stirring and washing the cheese curd until it is a homogeneous mass having a moisture content that meets the appropriate standard for the cheese being made. The drained curd is pressed and brined. The exact processes in the making of cheese varies between different cheese varieties. For soft cheeses, the curds are sparingly cut and allowed to drain naturally. For hard cheeses, the curds are typically heated and more whey is drained off. Most important common feature is that all are processed through a cut curd.

Although the demand of a particular cheese can vary, the cheese production level, and hence the curd production, in the cheese industry is kept at a constant high in order to balance milk supply. This typically leads to scrap cheese, which needs rework in low value processed cheese and cheese analogues.

In order to prevent unwanted cheese from going to waste, the present inventors sought to redirect curd that is originally intended or suitable for making a hard cheese into a process leading to a desirable cheese product. This offers the producer the opportunity to maintain production and milk demand, while adapting the output of the cheese type to market demand. As a result, less waste is produced and less rework is necessary.

Surprisingly, it has been found that curd intended or suitable for converting into a hard cheese can be processed to a spreadable cheese with the aid of a specific combination of starches. More in particular, the incorporation of at least an amylomaltase-treated starch and a pregelatinized starch resulted in a stable product having a good consistency, a good spreadability and an attractive creaminess.

Accordingly, in one embodiment the invention provides a method for preparing a spreadable cheese product, comprising the steps of (a) coagulating wholly or partly the protein of a milk product through the action of rennet or other suitable coagulating agents; (b) partially draining the whey resulting from the coagulation to obtain a cheese curd; (c) preparing a mixture of the cheese curd, water, an amylomaltase-treated starch (ATS) and a pregelatinized starch (PS); (d) heating and shearing the mixture at a temperature between 70 and 80°C followed by (e) cooling the mixture under stirring to obtain a spreadable cheese product.

Steps (a) and (b) of a method of the present invention involve the manufacture of a curd from a milk product according to methods known in the art. Any type of milk product can be used as starting material. In one embodiment, the milk product is skimmed milk, partly skimmed milk, cream, whey cream or buttermilk, or a combination of these materials. Typically, the milk product is obtained from cow, buffalo, goat or sheep. In a preferred aspect, raw cow's milk is used. For example, raw cow's milk is pasteurized by heating at 72°C for 15 seconds to destroy potentially harmful bacteria. The milk is then cooled to around 30°C.

It is of note that a process of the invention is clearly distinct from the classical way of preparing a spreadable cheese like a cream cheese from milk and cream wherein involving the separation of a fermented dairy blend into a (semi-solid) curd fraction and a liquid whey using centrifugation or ultrafiltration. An overview of different processes is described in US2013/273202 A1. Unexpectedly, the present inventors observed that a cut curd, which went via a pathway distinct from that of the regular cream cheese process, can be reconstituted in such a way that a spreadable cheese is obtained provided that a specific combination of starches is added.

WO2012/080150 discloses a spreadable gel which comprises 0.5 to 8 wt% of an amylomaltase treated starch, 0.5 to 8 wt% of a waxy starch, water and optionally a basic ingredient such as fruit, vegetable or soy. WO2012/080150 is primarily concerned with jams (jellies) and gel-like sauces which, when heated, such as in a microwave oven, become liquid and can be used as liquid sauce for preparing the meals. Nothing is mentioned about the manufacture of a spreadable cheese employing a starch blend of the present invention.

In step (a) the protein of a milk product is coagulated wholly or partly through the action of rennet or any other suitable coagulating agent(s) according to methods known in the art. The step of coagulation is effected by the action of "rennet", i.e. a suitable milk coagulating enzyme or mixture of enzymes of animal and/or microbial origin or other suitable milk coagulating agent. Rennet is added in sufficient quantity to induce coagulation in 5 to 30 minutes. The strength of different rennets can vary, though usual strength varies between 50 to 2500 IMCU(International milk clotting unit) .To facilitate dispersion the rennet may be diluted in pure water. Following rennet addition the retentate is agitated thoroughly and allowed to undergo quiescent coagulation. For example, step (a) comprises incubating the milk product with rennet and a food grade acidulant under conditions allowing for casein coagulation.

A starter culture of lactic acid bacteria may be added to help souring. These convert lactose into lactic acid and help in the coagulation process. The acidification of milk in cheese making by means of bacteria is called ripening. A variety of bacteria cultures are available for making specific cheese types. These bacteria, commonly called starter cultures, are added to the milk after pasteurization and at specific temperatures. They are allowed to work for specific time periods depending on the type of cheese. During this period the bacteria consumes the lactose which is milk sugar. As the bacteria eat, they produce lactic acid which in turn causes the milk protein to develop into curd. Other byproducts of this ripening stage provide flavor compounds which enhance the character of the finished cheese.

Following addition of the curdling ingredients, the milk is allowed to curdle under the appropriate conditions. For example, the milk is incubated for about 30 minutes at around 35°C. When the desired firmness is obtained, the curd can be cut into small pieces, followed by stirring and resting. In step (b) of a method of the invention, the whey resulting from the coagulation is partially drained to obtain a cheese curd.

Following curd formation, a mixture is prepared by adding water, an amylomaltase-treated starch (ATS) and a pregelatinized starch (PS) to the cheese curd, optionally salts, ascorbic acid and / or lactic acid can be added. In the normal process for hard cheese, as mentioned earlier, the curd is either kneaded or pressed and optionally ripened to obtain the end product. In contrast, in the present invention the curd mixture is put in a high shear cooker and sheared and heated to 72 °C optionally applying steam. The heating is continued until the mass is homogeneous. Then the resulting mixture is filled into containers for storage, usually in a refrigerator.

As described herein above, the invention is characterized among others by the addition of amylomaltase-treated starch and pregelatinized starch to a cut cheese curd.

The production of amylomaltase treated starch has been described in the art, see for example EP 0932444 B1. In one embodiment, an amylose-containing starch is converted by an α-1-4, α-1-4 glucanotransferase (amylomaltase) to a chain elongated amylopectin. The typical and relevant activity of the amylomaltase is that they are capable of breaking an α-1,4 bond between two glucose units to subsequently make a novel α-1,4 bond. In the end the amylose is reattached to the amylopectin resulting in the desired product. The product forms thermoreversible gels in low concentrations in water.

In one aspect, the amylomaltase treated starch can be prepared from suspension of potato starch in water (19 - 20 % w/w). This suspension is jet-cooked at 150 - 160°C in order to dissolve the starch. The product is cooled in vacuo to 70°C. Flash cooling is a preferred option. The pH is adjusted to 6.2 using for example 6N H₂SO₄. Then amylomaltase (2 ATU/g starch) is added and the solution is stirred for 2 to 20 hr at 70°C. Then the solution is jetcooked at 130 °C for a short time, for example 1 to 20 seconds and spray dried using for example a model Compact spray dryer (Anhydro, Denmark).

Suitable starches are for example chosen from maize, wheat, barley, rice, triticale, rice, millet, tapioca, arrow root, banana, potato, sweet potato starches, sago starch, or from high amylose starches like amylomaize, wrinkled pea starch, mung bean starch, and yellow pea starch. High amylose starches may be derived from naturally occurring mutant from cereal starches like high amylose corn, or peas, beans etc. or from genetically modified plant varieties such as potatoes modified to preferentially produce amylose. Alternatively, the amylomaltase-treated starch can be derived from a blend of amylose containing starches and amylopectin rich starches like waxy maize, waxy barley, waxy wheat, waxy rice, amylopectin potato, amylopectin tapioca, amylopectin sweet potato or amylopectin banana starch. Amylopectin starches may be derived from plants that selectively produce amylopectin such as waxy cereals or amylose-free potato mutants and/or genetically modified plant varieties such as potatoes and tapioca modified to selectively produce amylopectin.

As used herein, the term 'pregelatinized starch' is meant to refer to cold swelling or cold soluble starches. Pregelatinized starch (PS) can be prepared according to methods well known to the artisan. Non-exclusive examples thereof are spray drying, spray cooking, drum drying, extrusion, hydrous organic solvents. These techniques can sometimes be used in conjunction with cooking techniques such batch or jet cooking. Virtually all starches can be pregelatinized. For example the starch can be chosen from maize, wheat, barley, rice, triticale, rice, millet, tapioca, arrow root, banana, potato, sweet potato starches or from high amylose starches like amylomaize, wrinkled pea starch, mung bean starch. High amylose starches may be derived from a naturally occurring mutant from cereal starches like high amylose corn, or peas, beans etc. or from genetically modified plant varieties such as potatoes modified to preferentially produce amylose.

In one preferred embodiment the starch is chosen from the amylopectin-rich starches like waxy maize, waxy barley, waxy wheat, waxy rice, amylopectin potato, amylopectin tapioca, amylopectin sweet potato or amylopectin banana starch. More preferably, PS is a waxy root or tuber starch, most preferably waxy potato starch or waxy tapioca starch.

Amylopectin starches may be derived from plants that selectively produce amylopectin such as waxy cereals or amylose-free potato and tapioca mutants and/or genetically modified plant varieties such as potatoes and tapioca modified to selectively produce amylopectin. Alternatively, the pregelatinized starch can be derived from a separation process as described in patent application DE928100 in combination with pregelatinizing techniques.

The PS for use in a method of the invention can be a native starch or a starch derivative obtained by crosslinking, esterification and/or etherification. In one embodiment, PS is a high amylopectin starch such as a commercially available native pregelatinized amylopectin potato starch from AVEBE, Veendam, The Netherlands. In another embodiment, PS is a crosslinked and stabilized high amylopectin starch such as a commercially available pregelatinized crosslinked stabilized amylopectin potato starch from AVEBE, Veendam, The Netherlands. Combinations of native and derivatized PS can also be used.

The absolute and relative amounts of ATS and PS to be added to the curd can vary. Typically, the mixture comprises ATS in an amount of 2-4.5 %, preferably 2.5-3% by weight based on the dry weight of the final product. The typical amount of PS is 1-5 %, preferably 1.5-3%, by weight based on the dry weight of the final product. Preferably, the total amount of added starch (ATS+PS) is in the range of 3-6%, more preferably 3.5-5% by weight based on the dry weight of the final product. For example, about 26 gram of ATS and about 35 gram of PS are added to 800 gram of a cut curd comprising 37-38% of non-water components.

The relative proportion of ATS to PS in a starch blend of the invention is not critical to achieve an acceptable result. For example, ATS and PS may be used in a relative weight ratio of between 95:5 and 5:95, preferably in a relative weight ratio of 10:1 to 1:10. In one aspect, ATS is used in excess of PS. Preferably, PS is used in an amount equal to or larger than the amount of ATS, for example ATS and PS may be used in a relative weight ratio of 1 : 0.5 to 1 : 2.0, preferably 1 : 0.75 to 1 : 1.5.

Known spreadable and pumpable cheese products are typically prepared by heating naturally ripened cheese with an emulsifier added thereto at an appropriate temperature. If such emulsifiers are used, this is mostly done in the form of so-called melting salts. It has to be stipulated that the melting salts are not emulsifiers but they restore the emulsifying ability of the milk proteins very efficiently. (http://www.magma.ca/∼scimat/Cheese.htm). The emulsifiers ensure that a product is obtained which is microbiologically more stable. A pasteurization step ensures that the product is microbiologically stable and does not ripen any further. The melting salts prevent the cheese from turning, which means that the cheese separates into a fat fraction and a water fraction. Many employed melting salts are phosphates and citrates. A disadvantage of the use of melting salts is that they typically cause crystals and influence the pH of the spreadable cheese. Besides, it also requires labelling which is less desired as the food processing industry is aiming for clean or no labelling.

It was surprisingly found that a method of the invention does not require the addition of traditional melting salts in order to obtain a spreadable cheese product having an acceptable structure and consistency, and which remains stable for at least 1 month. Apparently, the melting salts can be replaced substantially or even completely by the starch blend of the invention comprising ATS and PS.

Hence, in one embodiment the mixture does not contain any additional (melting) salts.

However, a method of the invention is in no way limited to avoiding or excluding melting salts, and the mixture may further comprises one or more salts, preferably sodium chloride. Other useful ingredients include one or more acids, preferably ascorbic acid or lactic acid, to lower the pH of the product, e.g. to a value of approximately 4 to 5, preferably about 4.5.

The order of adding the various ingredients to a cut curd can vary. In one embodiment, the curd and dry ingredients (starches, optionally salt(s)) are combined and heated to a temperature of about 55 to 65°C while mixing. Then, an acid such as lactic acid or ascorbic acid is added in such an amount that the final pH is in the range of 4 to 5. The mixture is then heated further until a temperature of between 71 and 75°C, typically for a duration of about 1-2 minutes. Preferably, step (d) comprises heating and shearing at a temperature between 71 and 75°C. The heating may comprise the application of steam. Following heating, step (e) is performed comprising cooling the mixture under stirring to obtain a cream cheese product. The resulting product can then be transferred to a suitable container and stored refrigerated.

Accordingly, the invention also provides a spreadable cheese product obtainable by a method according to the invention.

A further aspect relates to a composition comprising (i) a cheese curd obtained in or intended for a process for making a hard-type cheese (ii) an amylomaltase-treated starch (ATS) and (iii) a pregelatinized starch (PS). Typically, rennet coagulated curd has a pH between 5.5 to 6.5. Such a curd is obtained through a cutting and pressing process

All the preferences for starch types, starch amounts, starch ratio's and additives described herein above are applicable for a composition of the invention. In a specific embodiment, the invention provides a composition comprising a curd, amylomaltase-treated potato starch and a pregelatinized amylopectin potato starch (native or chemically modified), optionally further comprising a salt and an acid.

A composition of the invention is advantageously used in the manufacture of a spreadable cheese product.

### EXPERIMENTAL SECTION

### Example 1: Selection of useful starches.

This example describes the evaluation of a number of different starches for use in the manufacture of a spreadable cheese from a Rennet coagulated cheese curd.

### Materials

- Raw cow's milk was obtained from farm Bos (Zuidbroek, the Netherlands) or Schouten (Kantens, the Netherlands).
- Cheese culture, type G600.7 and rennet (Kalase, 150 IMCU) were obtained from CSK Food Enrichment (Leeuwarden, the Netherlands)
- Lactic acid ∼ 90%
- Sodium chloride
- Calcium Chloride
- Starches used
   ∘ ATPS: Amylomaltase-treated potato starch by AVEBE.
   ∘ PAPS: pregelatinized amylopectin potato starch by AVEBE
   ∘ MAPS: non-pregelatinized crosslinked hydroxypropylated amylopectin potato starch by AVEBE
   ∘ IMAPS: pregelatinized crosslinked acetylated amylopectin potato starch by AVEBE
   ∘ MACS: non-pregelatinized crosslinked hydroxypropylated amylopectin corn starch (waxy maize) by Ingredion
   ∘ MTS: non-pregelatinized crosslinked hydroxypropylated tapioca starch by Ingredion

### Curd preparation

- Raw cow's milk is pasteurized in a double jacket vessel, until a temperature of 72°C has been reached. Subsequently the milk is cooled to 35°C.
- Cheese culture (kg milk x 1.25 = grams of culture) and rennet (kg milk x 0.25 = grams of rennet) and calcium chloride are added to the pasteurized milk.
- The milk is allowed to curdle for approx. 30 minutes at 35°C. The firmness of the curd is judged by making a small cut in the curd and lifting underneath the cut. A "porcelain break" (clean cut with sharp edges) should be visible.
- When the desired firmness is reached, the curd is cut into small squares (< 1 x 1 cm). The curd is stirred for 3 minutes and left to rest for 30 minutes.
- The curd is drained, by opening a drain in the vessel (letting the whey out).
- Warm water (approx. 35°C, about half of the volume of the original amount of milk) is added to the curd. This is left to rest for 15-20 minutes. The curd is drained again by passing it over a sieve.
- The curd is placed in a container in a water bath at 35°C to culture until a pH of 5.7 is reached. The curd is stored at 4°C.

### Measurements / calculations

- As whey separation from curd continues during storage, the ration between curd particles (white gummy lumps) and whey (clear yellowish liquid) is determined, to be sure to use the correct amounts each time.
- Water is added to the curd/whey mixture, to imitate steam injection which will occur in certain equipment (e.g. Stephan UM130).
- Cream can be added to the recipe, to increase the fat content of the final product. Without additional cream, the fat content is approx. 13%.
- The moisture content of the curd particles is determined by using a moisture balance at 140°C. Dry matter of the final products is 35%-45%
- Lactic acid is used to lower the pH of the spreadable cheese to approx. 4.5.
- Salt (sodium chloride) is added.

### Spreadable cheese preparation

- Curd and whey (in the correct ratio) are put in the bowl of a Stephan cooker (type UM5) and mixed for 5 minutes at 2000 rpm.
- Starch additives are added in dry form and mixed for another 5 minutes at 2000 rpm.
- Using a hot water bath, the double jacket bowl of the Stephan cooker is heated. Product is mixed at 2000 RPM.
- When the mixture has reached 60°C, lactic acid is added, in such amount that the final pH of the product will be around 4.7. The mixture is further heated until the product has reached 72°C.
- The product is transferred into small sample containers and stored refrigerated.

**Table 1**

| **Starch additive** | **Results** |
|---|---|
| None (negative reference) | Phase separation, no acceptable product |
| MAPS (2 to 5%) | Thick, unworkable paste during process |
| MACS (3.25 to 3.75%) | Thick, unworkable paste during process |
| MTS (3.25 to 3.50%) | Thick, unworkable paste during process |
| ATPS (2 to 2.5%) | Grainy, crumbly texture with no coherent cheese entity |
| PAPS (2 to 5%) | Thin, liquid texture, no acceptable product |
| ATPS (2 to 3%)+ PAPS (2 to 3%) | **Good consistency, good spread ability** |
| ATPS (2 to 3%) + IMAPS (1,5 to 3%) | **Good consistency, good spreadability** |

In view of the results shown in Table 1, in can be concluded that a combination of an amylomaltase-treated starch and a pregelatinized starch, is advantageously used in the manufacture of a spreadable cheese product. In contrast, amylomaltase-treated starch alone, or the pregelatinized starch alone, or the non-pregelatinized, so-called "cook-up" starches that are typically used for creating stable structures in dairy applications, are not suitable.

### Example 2: Method for the manufacture of a spreadable cheese.

This example describes one way of carrying out the present invention using a specific combination of starches to aid in the processing of a cheese curd intended for making a hard cheese into a spreadable cheese.

### Materials & Method

Curd (from a process for hard cheese) was obtained from Cheese Farm Karwij in Rolde, The Netherlands.

800 g of curd, (37.7 % of non-water components), 25.9 g of ATPS, 34.5 g of PAPS, 3.45 g of NaCl, 320 g of water and 7.05 g of ascorbic acid were placed in a high speed mixer (Thermomix). The pH was 5.15. The mixer was started at 600 rpm (speed 9). The mixture was heated until 72.5°C, which was maintained for 1 minute. The mixture was cooled with stirring and cooled until 40 °C. Then the mixture was filled in containers for refrigeration. After one night the samples were tested and judged on creaminess. The resulting product was perceived as a spreadable cheese, with a good consistency and spreadability

The above experiment was essentially repeated with a curd of 35% dry matter (860 g) to which was added 25.9 g of ATPS, 34.5 g of IMAPS, 3.5 g of NaCl, 7.05 g of ascorbic acid and 300 g of water. IMAPS is a pregelatinized crosslinked/stabilized amylopectin potato starch.

The result was similar to the cream cheese obtained with ATPS and PAPS described herein above, demonstrating the structuring effect of amylomaltase-treated starch in combination with either native or derivatized pregelatinized starch. In contrast, an experiment with only ATPS failed because of a grainy, crumbly, texture with no coherent cheese entity.

### Example 3: Spreadable cheese

An exemplary spreadable cheese product has the following composition

| Ingredients | % |
|---|---|
| Curd / whey | 89.78 |
| Water | 4.42 |
| PAPS | 2.70 |
| ATPS | 2.20 |
| Salt | 0.50 |
| Lactic acid | 0.40 |

Spreadable cheese has approx. 40% solids and 13% fat.

### Example 4 : Different combinations of ATS and PS

| **Combinations of starch additives** | | | |
|---|---|---|---|
| **PAPS (%)** | **ATPS (%)** | **Ratio ATPS/PAPS** | **Results** |
| 2.60 | 2.30 | 1 : 1.13 | Good product, firms during shelf life, getting more crumbly |
| 2.55 | 2.20 | 1 : 1.16 | Good consistency, good spreadability |
| 2.70 | 2.20 | 1 : 1.23 | Good consistency, good spreadability |
| 2.85 | 2.10 | 1 : 1.36 | Good consistency, good spreadability, firms during shelf life |

| **IMAPS (%)** | **ATPS (%)** | **Ratio ATPS/ IMAPS** | **Results** |
|---|---|---|---|
| 1.80 | 2.20 | 1 : 0.82 | Good consistency, good spreadability |
| 2.30 | 2.20 | 1 : 1.05 | Slightly too firm consistency, reasonable spreadability |
| 2.70 | 2.20 | 1 : 1.23 | Slightly too firm consistency, reasonable spreadability |

## Claims

1. A method for preparing a spreadable cheese product, comprising the steps of
(a) coagulating wholly or partly the protein of a milk product through the action of rennet or other suitable coagulating agents, preferably wherein the milk product is obtained from cow, buffalo, goat or sheep, more preferably from cow;
(b) partially draining the whey resulting from the coagulation to obtain a cheese curd;
(c) preparing a mixture of the cheese curd, water, an amylomaltase-treated starch (ATS) and a pregelatinized starch (PS);
(d) heating and shearing the mixture at a temperature between 70 and 80°C; followed by
(e) cooling the mixture under stirring to obtain a spreadable cheese product.

2. Method according to claim 1, wherein the milk product is skimmed milk, partly skimmed milk, cream, whey cream or buttermilk, or any combination of these materials.

3. Method according to any one of the preceding claims, wherein step (a) comprises incubating the milk product with rennet and a food grade acidulant under conditions allowing for casein coagulation.

4. Method according to any one of the preceding claims, wherein the ATS and/or PS is derived from maize, wheat, barley, rice, triticale, rice, millet, tapioca, arrow root, banana, potato, sweet potato starches, wrinkled pea starch, mung bean starch, sago starch and yellow pea starch.

5. Method according to any one of the preceding claims, wherein the ATS is derived from a blend of amylose- containing starches and amylopectin- rich starches like waxy maize, waxy barley, waxy wheat, waxy rice, amylopectin potato, amylopectin tapioca, amylopectin sweet potato or amylopectin banana starch.

6. Method according to any one of the preceding claims, wherein PS is native starch or a starch derivative obtained by crosslinking, esterification and/or etherification, preferably wherein PS is a waxy root or tuber starch, more preferably wherein PS is a waxy potato starch or waxy tapioca starch.

7. Method according to any one of the preceding claims, wherein PS is a crosslinked and stabilized high amylopectin starch.

8. Method according to any one of claims 1-6, wherein PS is a non-crosslinked, non-stabilized high amylopectin starch.

9. Method according to any one of the preceding claims, wherein the mixture comprises ATS in an amount 2.0-4.5%, preferably 2.5-3% by weight of the mixture, and/or wherein the mixture comprises PS in an amount of 1.0-5.0%, preferably 1.5-3.0%, by weight of the mixture.

10. Method according to any one of the preceding claims, wherein ATS and PS are used in a relative weight ratio of 10:1 to 1:10, preferably wherein ATS and PS are used in a relative weight ratio of 1 : 0.5 to 1 : 2.0, preferably 1 : 0.75 to 1 : 1.5.

11. Method according to any one of the preceding claims, wherein the mixture further comprises one or more salts, preferably sodium chloride, and/or one or more food grade acids, preferably ascorbic acid or lactic acid.

12. Method according to any one claims 1-10, wherein the mixture does not contain any additional melting salts.

13. Method according to any one of the preceding claims, wherein step (d) comprises heating and shearing at a temperature between 71 and 75°C.

14. Method according to any one of the preceding claims, wherein step (d) comprises the application of steam.

15. A spreadable cheese product obtainable by a method according to any one of claims 1 to 14.

16. A composition comprising (i) cheese curd obtained in a process for making a hard-type cheese, (ii) an amylomaltase-treated starch (ATS) and (iii) a pregelatinized starch (PS).

17. Use of a composition according to claim 16 in the manufacture of a spreadable cheese product.

## Patentansprüche

1. Verfahren zur Herstellung eines streichfähigen Käseprodukts, umfassend die Schritte von:
(a) ganzes oder teilweises Koagulieren des Proteins eines Milchprodukts durch die Wirkung von Lab oder anderen geeigneten Koagulierungsmitteln, bevorzugt wobei das Milchprodukt erhalten wird von Kuh, Büffel, Ziege oder Schaf, bevorzugter von der Kuh;
(b) teilweises Ablassen der von der Koagulation resultierenden Molke, um einen Quark zu erhalten;
(c) Zubereiten eines Gemisches aus dem Quark, Wasser, einer mit Amylomaltase behandelten Stärke (ATS) und einer vorgelierten Stärke (PS);
(d) Erhitzen und Zerkleinern des Gemisches bei einer Temperatur zwischen 70 und 80°C; gefolgt von
(e) Kühlen des Gemisches unter Rühren, um ein streichfähiges Käseprodukt zu erhalten.

2. Verfahren nach Anspruch 1, wobei das Milchprodukt entrahmte Milch, teilentrahmte Milch, Sahne, Molkerahm oder Buttermilch oder eine beliebige Kombination dieser Stoffe ist.

3. Verfahren nach einem der vorhergehenden Ansprüche, wobei Schritt (a) Inkubieren des Milchprodukts mit Lab und einem ansäuernden Mittel von Lebensmittelqualität unter Bedingungen, die eine Kaseinkoagulation erlauben, umfasst.

4. Verfahren nach einem der vorhergehenden Ansprüche, wobei die ATS und/oder PS von Mais, Weizen, Gerste, Reis, Triticale, Reis, Hirse, Tapioka, Pfeilwurzstärke, Banane, Kartoffel, Süßkartoffelstärken, Runzelerbsenstärke, Mungobohnestärke, Sagostärke und Ranken-Platterbsenstärke stammt.

5. Verfahren nach einem der vorhergehenden Ansprüche, wobei die ATS von einer Mischung aus amylosehaltigen Stärken und amylopektinreichen Stärken wie Wachsmais, Wachsgerste, Wachsweizen, Wachsreis, Amylopektin-Kartoffel-, Amylopektin-Tapioka-, Amylopektin-Süßkartoffel- oder Amylopektin-Bananenstärke stammt.

6. Verfahren nach einem der vorhergehenden Ansprüche, wobei PS native Stärke oder ein Stärkederivat, erhalten durch Vernetzung, Veresterung und/oder Veretherung, ist, bevorzugt wobei PS eine Wachswurzel- oder Knollenstärke ist, bevorzugter wobei PS eine Wachskartoffelstärke oder Wachstapiokastärke ist.

7. Verfahren nach einem der vorhergehenden Ansprüche, wobei PS eine vernetzte und stabilisierte amylopektinreiche Stärke ist.

8. Verfahren nach einem der Ansprüche 1-6, wobei PS eine nicht vernetzte, nicht stabilisierte amylopektinreiche Stärke ist.

9. Verfahren nach einem der vorhergehenden Ansprüche, wobei das Gemisch ATS in einer Menge von 2,0-4,5 %, bevorzugt 2,5-3 %, nach Gewicht des Gemisches umfasst und/oder wobei das Gemisch PS in einer Menge von 1,0-5,0 %, bevorzugt 1,5-3,0 %, nach Gewicht des Gemisches umfasst.

10. Verfahren nach einem der vorhergehenden Ansprüche, wobei ATS und PS in einem relativen Gewichtverhältnis von 10:1 bis 1:10 verwendet werden, bevorzugt wobei ATS und PS in einem relativen Gewichtverhältnis von 1:0,5 bis 1:2,0, bevorzugt 1:0,75 bis 1:1,5 verwendet werden.

11. Verfahren nach einem der vorhergehenden Ansprüche, wobei das Gemisch ferner ein oder mehr Salze umfasst, bevorzugt Natriumchlorid, und/oder eine oder mehr Säuren in Lebensmittelqualität, bevorzugt Ascorbinsäure oder Milchsäure.

12. Verfahren nach einem der Ansprüche 1-10, wobei das Gemisch keine zusätzlichen Schmelzsalze enthält.

13. Verfahren nach einem der vorhergehenden Ansprüche, wobei Schritt (d) das Erhitzen und Zerkleinern bei einer Temperatur zwischen 71 und 75°C umfasst.

14. Verfahren nach einem der vorhergehenden Ansprüche, wobei Schritt (d) die Anwendung von Dampf umfasst.

15. Streichfähiges Käseprodukt, erhältlich durch ein Verfahren nach einem der Ansprüche 1 bis 14.

16. Zusammensetzung, umfassend (i) Quark, erhalten in einem Verfahren zur Herstellung eines Hartkäses, (ii) einer mit Amylomaltase behandelten Stärke (ATS) und (iii) einer vorgelierten Stärke (PS).

17. Verwendung einer Zusammensetzung nach Anspruch 16 in der Herstellung eines streichfähigen Käseprodukts.

## Revendications

1. Méthode de préparation d'un produit de fromage pouvant être étalé, comprenant les étapes de
(a) coagulation totale ou partielle des protéines d'un produit laitier par l'action d'une présure ou d'autres agents de coagulation appropriés, de préférence dans laquelle le produit laitier est obtenu à partir d'une vache, d'un buffle, d'une chèvre ou d'un mouton, de manière davantage préférée d'une vache ;
(b) égouttage partiel du lactosérum résultant de la coagulation afin d'obtenir un caillé de fromage ;
(c) préparation d'un mélange du caillé de fromage, d'eau, d'un amidon traité par amylomaltase (ATS) et d'un amidon prégélatinisé (PS) ;
(d) chauffage et cisaillement du mélange à une température située entre 70 et 80 °C ; suivi d'un
(e) refroidissement du mélange sous agitation afin d'obtenir un produit de fromage pouvant être étalé.

2. Méthode selon la revendication 1, dans laquelle le produit laitier est un lait écrémé, un lait partiellement écrémé, une crème, une crème de lactosérum ou un babeurre, ou n'importe quelle combinaison de ces matières.

3. Méthode selon l'une quelconque des revendications précédentes, dans laquelle l'étape (a) comprend une mise en incubation du produit laitier avec une présure et un acidulant de qualité alimentaire dans des conditions permettant une coagulation de la caséine.

4. Méthode selon l'une quelconque des revendications précédentes, dans laquelle l'ATS et/ou le PS sont dérivés d'amidons de maïs, de blé, d'orge, de riz, de triticale, de riz, de millet, de tapioca, d'arrow-root, de banane, de pomme de terre, de patate douce, de l'amidon de pois ridé, de l'amidon de haricot mungo, de l'amidon de sagou et de l'amidon de pois jaune.

5. Méthode selon l'une quelconque des revendications précédentes, dans laquelle l'ATS est dérivé d'un mélange d'amidons contenant de l'amylose et d'amidons riches en amylopectine comme l'amidon de maïs cireux, d'orge cireux, de blé cireux, de riz cireux, de pomme de terre contenant de l'amylopectine, de tapioca contenant de l'amylopectine, de patate douce contenant de l'amylopectine ou de banane contenant de l'amylopectine.

6. Méthode selon l'une quelconque des revendications précédentes, dans laquelle le PS est un amidon natif ou un dérivé d'amidon obtenu par réticulation, estérification et/ou éthérification, de préférence dans laquelle le PS est un amidon de racine ou tubercule cireux, de manière davantage préférée dans laquelle le PS est un amidon de pomme de terre cireuse ou un amidon de tapioca cireux.

7. Méthode selon l'une quelconque des revendications précédentes, dans laquelle le PS est un amidon réticulé et stabilisé à teneur élevée en amylopectine.

8. Méthode selon l'une quelconque des revendications 1 à 6, dans laquelle le PS est un amidon non réticulé et non stabilisé à teneur élevée en amylopectine.

9. Méthode selon l'une quelconque des revendications précédentes, dans laquelle le mélange comprend un ATS en une quantité de 2,0 à 4,5 %, de préférence de 2,5 à 3 % en poids du mélange, et/ou dans laquelle le mélange comprend un PS en une quantité de 1,0 à 5,0 %, de préférence de 1,5 à 3,0 %, en poids du mélange.

10. Méthode selon l'une quelconque des revendications précédentes, dans laquelle l'ATS et le PS sont utilisés à un rapport en poids relatif de 10 : 1 à 1 : 10, de préférence dans laquelle l'ATS et le PS sont utilisés à un rapport en poids relatif de 1 : 0,5 à 1 : 2,0, de préférence de 1 : 0,75 à 1 : 1,5.

11. Méthode selon l'une quelconque des revendications précédentes, dans laquelle le mélange comprend en outre un ou plusieurs sels, de préférence du chlorure de sodium, et/ou un ou plusieurs acides de qualité alimentaire, de préférence l'acide ascorbique ou l'acide lactique.

12. Méthode selon l'une quelconque des revendications 1 à 10, dans laquelle le mélange ne contient aucun sel fusible supplémentaire.

13. Méthode selon l'une quelconque des revendications précédentes, dans laquelle l'étape (d) comprend un chauffage et un cisaillement à une température située entre 71 et 75 °C.

14. Méthode selon l'une quelconque des revendications précédentes, dans laquelle l'étape (d) comprend l'application de vapeur d'eau.

15. Produit de fromage pouvant être étalé pouvant être obtenu par une méthode selon l'une quelconque des revendications 1 à 14.

16. Composition comprenant (i) un caillé de fromage obtenu dans un procédé de préparation d'un fromage de type dur, (ii) un amidon traité par amylomaltase (ATS) et (iii) un amidon prégélatinisé (PS) .

17. Utilisation d'une composition selon la revendication 16 dans la préparation d'un produit de fromage pouvant être étalé.
